# EUROPEAN PATENT SPECIFICATION

(11) **EP 0 860 057 B1**
(45) Date of publication and mention of the grant of the patent: **20.09.2000**
(21) Application number: 96935186.5
(22) Date of filing: 07.11.1996
(51) Int. Cl.: H04B 7/005, H03L 5/02

(54) **METHOD AND APPARATUS FOR POWER CONTROL IN A TELEPHONE SYSTEM**
VERFAHREN UND ANORDNUNG ZUR LEISTUNGSREGELUNG IN EINEM MOBILEN TELEFONSYSTEM
PROCEDE ET APPAREIL DE REGULATION DE PUISSANCE DANS UN SYSTEME TELEPHONIQUE

(30) Priority: 10.11.1995 GB 9523062; 01.12.1995 GB 9524663
(43) Date of publication of application: 26.08.1998
(73) Proprietor: Ionica International Limited, Cambridge CB4 4AS (GB)
(72) Inventor: MARTIN, Paul, Maxwell, Newmarket, Suffolk CB8 9XS (GB); ALBROW, Richard, John, Cambridge CB1 6PF (GB); PIERCY, Neil, Philip, Thriplow Royston Herts SG8 7RE (GB); SHORE, Christopher, John, Cambridge CB4 1UP (GB); GOODINGS, Rupert, Leslie, Alexander, Cambridge CB4 1DD (GB)
(74) Representative: Hogg, Jeffery Keith
(86) International application number: GB9602727
(87) International publication number: WO9717768

(56) References cited:
- EP-A- 0 371 700
- EP-A- 0 468 507
- EP-A- 0 645 940
- US-A- 4 613 990

## Description

The present invention relates to controlling power transmitted from a first transmitting and receiving unit to a second transmitting and receiving unit in a network, in particular where units are at fixed locations.

Automatic power control is known and used widely in mobile GSM networks, in particular, being described in GSM specifications 05.05 and 05.08. In GSM networks, automatic power control is used to control the power transmitted from each mobile station to a base station and, optionally, can be used to control power transmitted from the base station. In GSM, automatic power control is used to minimise the level of power transmitted. An indicator of the initial transmit power to be used by the mobile station is sent in a message from the base station and the mobile station complies with this message.

EP0468507A1 describes a transmitter which operates in a radio communications system such that the transmitter's output power is specified by an external device and is stabilised during a transmission time slot by a gain control circuit.

EP0645940A1 describes transmission power control apparatus for a system having mobile and fixed units. The transmission power of a first unit can be adjusted to a desired level in response to a control signal provided by a second unit. The second unit develops the control signals in response to the quality of transmissions received from the first unit.

The present invention provides a method of transmitting messages in predetermined time slots within fixed length times frames between a first transmitting and receiving unit and a second transmitting and receiving unit in which, a power level of a message from at least one unit is detected and characterised in that if the detected level falls outside a range around a predetermined target power level, then the power level of the next message to be transmitted is adjusted so that power level of the next message falls within said range, detection and possible adjustment steps being repeated iteratively for a series of ranges, with each range being smaller than or equal to the previous range applied, and at least one range being smaller than the previous range applied.

Successive measurement steps can have increasingly long measurement periods so as to determine power levels to successively greater accuracy. This advantageously allows the target level to be accurately and quickly achieved.

The first unit is preferably a base station, and the second unit is preferably one of a plurality of subscriber units. Preferably, the power of signals transmitted from the subscriber unit is detected and adjusted. Subscriber units are preferably at fixed locations. Transmissions are preferably by radio.

The present invention also relates to apparatus comprising a first transmitting and receiving unit and a second transmitting and receiving unit for messages in predetermined time slots within fixed length time frames, at least one unit comprising a power level detection and control means which detects a power level of a message received from the other unit, characterised in that the power level detection and control means determines whether said detected level falls outside a range around a predetermined target power level, and, if said detected level falls outside said range, requests the other unit to adjust the power level of the next message to be transmitted so that power level of the next message falls within the range, wherein the power level detection and control means repeats the detection and possible adjustment steps iteratively for a series of ranges, with at least one range being smaller than the previous range applied and each range being smaller than or equal to the previous range applied.

The present invention also relates to communication means comprising a base station and plurality of subscriber units, the base station communicating with each subscriber unit by sending and receiving messages in predetermined time slots within fixed length time frames, wherein power levels of messages from a subscriber unit are repeatedly detected by the base station which sends control signals dependent on the detected power level to selectively adjust the power level of messages subsequently transmitted by said subscriber unit, characterised by each detection and adjustment step including determination of whether or not said detected power level falls within a predetermined range of values around a target power value and adjustment being dependent on said determination of the detected power level not falling within said predetermined range, wherein for at least some successive detection and possible adjustment steps the required power range is smaller than for previous detection steps.

In a preferred embodiment, there is a network comprising a plurality of cells each having a base station and subscriber unit, the transmit power of a subscriber unit is adjusted until the power received at a base station meets the target power. This is known as "closed loop" control. In this embodiment, the transmit power from the subscriber unit is controlled such that the power received at the base station falls within a predetermined range around the target power.

This embodiment reuses RF carrier frequencies among cells to maximise the number of calls which can be made at any time despite a limited bandwidth allocation. The level of co-channel interference therefore has to be carefully controlled in order to offer the least interference to other cells using the same frequency allocations. The present invention in its preferred embodiments advantageously reduces the amount of interference caused by transmissions from subscriber units, in particular by ensuring power levels are at substantially the minimum necessary for good reception.

A preferred embodiment of the invention will now be described, by way of example, with reference to the drawings in which:
Figure 1 is a schematic diagram illustrating the system including a base station (BTE - Base Terminating Equipment) and subscriber unit (NTE - Network Terminating Equipment),
Figure 2 is a diagram illustrating frame structure and timing for a duplex link,
Figure 3 is a schematic topology of part of the preferred network showing four cells each having a base station and subscriber units,
Figure 4 is a schematic graph illustrating power level tolerances applied over time,
Figure 5 is a graphical representation of one example of power level detection and adjustment.

### The Basic System

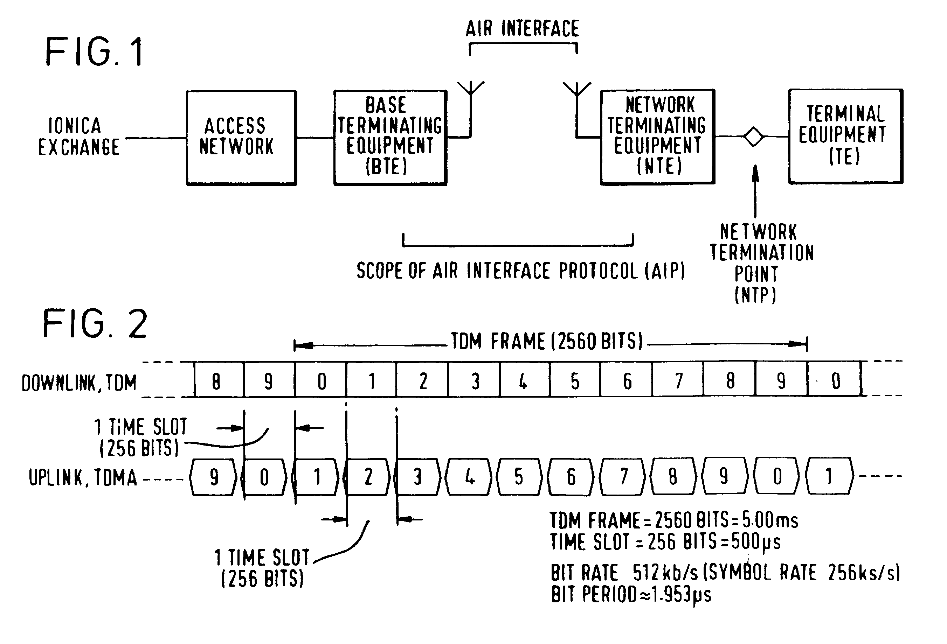

As shown in Figure 1, the preferred system is part of a telephone system in which the local wired loop from exchange to subscriber has been replaced by a full duplex radio link between a fixed base station and fixed subscriber unit. The preferred system includes the duplex radio link, and transmitters and receivers for implementing the necessary protocol. There are similarities between the preferred system and digital cellular mobile telephone systems such as GSM which are known in the art. This system uses a protocol based on a layered model, in particular the following layers; PHY (Physical), MAC (Medium Access Control), DLC (Data Link Control), NWK (Network).

One difference compared with GSM is that, in the preferred system, subscriber units are at fixed locations and there is no need for hand-off arrangements or other features relating to mobility. This means, for example, in the preferred system directional antennae and mains electricity can be used.

Each base station in the preferred system provides six duplex radio links at twelve frequencies chosen from the overall frequency allocation, so as to minimise interference between base stations nearby. The frame structure and timing for the duplex link is illustrated in Figure 2. Each duplex radio link comprises an up-link from a subscriber unit to a base station and, at a fixed frequency offset, a down-link from the base station to the subscriber unit. The down-links are TDM, and the up-links are TDMA. Modulation for all links is π/4 - DQPSK, and the basic frame structure for all links is ten slots per frame of 2560 bits i.e. 256 bits per slot. The bit rate is 512kbps. Down-links are continuously transmitted and incorporate a broadcast channel for essential system information. When there is no user information to be transmitted, the down-link transmissions continue to use the basic frame and slot structure and contain a suitable fill pattern.

For both up-link and down-link transmissions, there are two types of slot: normal slots which are used after call set-up, and pilot slots used during call set-up.

Each down-link normal slot comprises 24 bits of synchronisation information followed by 24 bits designated S-field which includes an 8 bit header, followed by 160 bits designated D-field. This is followed by 24 bits of Forward Error Correction and an 8 bit filler, followed by 12 bits of the broadcast channel. The broadcast channel consists of segments in each of the slots of a frame which together form the down-link common signalling channel which is transmitted by the base station, and contains control messages containing link information such as slot lists, multi-frame and super-frame information, connectionless messages and other information basic to the operation of the system.

During call set-up, each down-link pilot slot contains frequency correction data and a training sequence for receiver initialisation, with only a short S-field and no D-field information.

Up-link slots basically contain two different types of data packet. The first type of packet, called a pilot packet, is used before a connection is set up, for example, for an ALOHA call request and to allow adaptive time alignment. The other type of data packet, called a normal packet, is used when a call has been established and is a larger data packet, due to the use of adaptive time alignment.

Each up-link normal packet contains a data packet of 244 bits which is preceded and followed by a ramp of 4 bits duration. The ramps and the remaining bits left of the 256 bit slot provide a guard gap against interference from neighbouring slots due to timing errors. Each subscriber unit adjusts the timing of its slot transmissions to compensate for the time it takes signals to reach the base station. Each up-link normal data packet comprises 24 bits of synchronisation data followed by an S-field and D-field of the same number of bits as in each down-link normal slot.

Each up-link pilot slot contains a pilot data packet which is 192 bits long preceded and followed by 4 bits ramps defining an extended guard gap of 60 bits. This larger guard gap is necessary because there is no timing information available and without it propagation delays would cause neighbouring slots to interfere. The pilot packet comprises 64 bits of sync followed by 104 bits of S-field which starts with an 8 bit header and finishes with a 16 bit Cyclic Redundancy Check, 2 reserved bits, 14 FEC bits, and 8 tail bits. There is no D-field.

The S-field in the above mentioned data packets can be used for two types of signalling. The first type is MAC signalling (MS) and is used for signalling between the MAC layer of the base station and the MAC layer of a subscriber unit whereby timing is important. The second type is called associated signalling, which can be slow or fast and is used for signalling between the base station and subscriber units in the DLC or NWK layers. The D-field is the largest data field, and in the case of normal telephony contains digitised speech, but can also contain a non-speech data samples.

Provision is made in the preferred system for subscriber unit authentication using a challenge response protocol. General encryption is provided by combining the speech or data with a non-predictable sequence of cipher bits produced by a key stream generator which is synchronised to the transmitted super-frame number.

In addition, the transmitted signal is scrambled to remove dc components.

### Automatic Power Control

Automatic Power Control operates in the following manner for all RF frequency/time slot settings, ie. at the MAC level. At the start of a call connection which is made at the MAC layer, the subscriber unit begins transmitting control MS signals at a predetermined power. The received power at a base station is measured and adjustment commands are sent to the subscriber unit. The subscriber unit responds to these commands by changing its transmit power by the increment suggested by the base station. The base station measures the received power for the duration of the call and sends appropriate commands to the subscriber unit. This process is accelerated at MAC initialisation by first using short initial measurement periods and relaxed target tolerances.

The principal advantage of this whole process is in the reduction of interference in the network.

### Interference

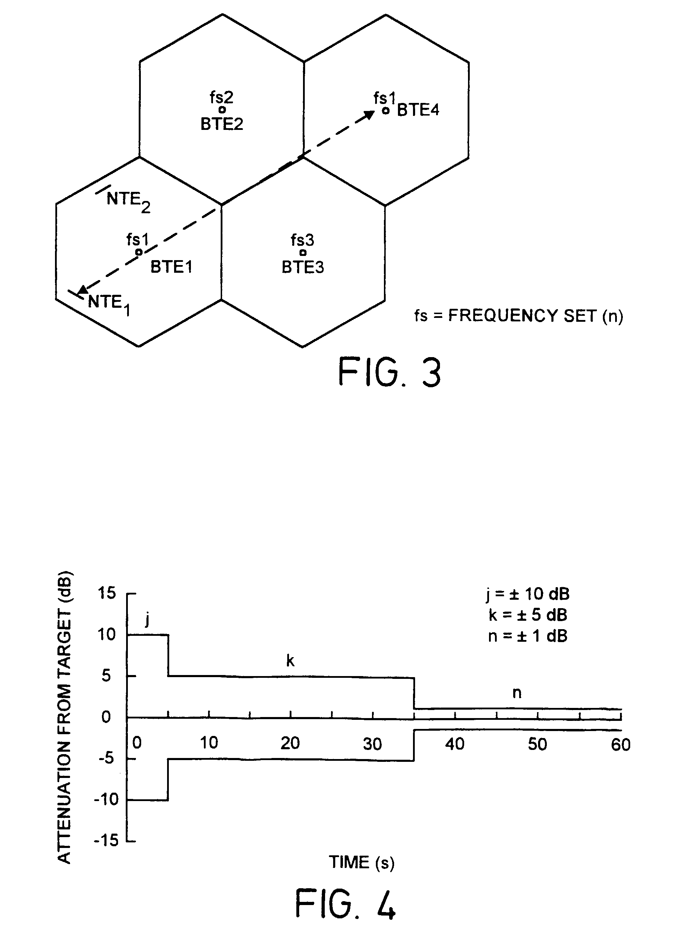

There are two types of interference; co-channel interference and adjacent channel interference as described below. A typical cellular topography is illustrated in Figure 3. The reference cell is that containing base station BTE 1. The available frequencies are divided into a number of subsets, denoted fs1, fs2, fs3.

### Co-Channel Interference

Cells containing base station BTE 1 and base station BTE 4 operate with the same frequency set. Transmissions from subscriber unit NTE 1 to base station BTE 1 result in co-channel interference to base station BTE 4. The exact level of interference depends on the path loss between the two cells. Nevertheless, minimising the transmit power from subscriber unit NTE 1 minimises the level of uplink interference present at base station BTE 4.

### Adjacent Channel Interference

Cells containing base stations BTE 1, BTE 2 and BTE 3 have mutually independent frequency sets, denoted fs1, fs2 and fs3 respectively. Each frequency set consists of a number of selected frequencies, denoted fn where n increases with increasing frequency. However, optimum usage of the available frequency sets will involve base stations BTE 1, BTE 2 and BTE 3 having adjacent frequencies present in the frequency sets (i.e. if selected rf frequency denoted n is used at base station BTE 1 then selected rf frequency denoted n±1 would be used by base station BTE 2 or BTE 3). Interference is possible if the power transmitted by subscriber unit NTE 1 in adjacent channels (n±1 using the notation above) is not sufficiently attenuated and the path loss between subscriber unit NTE 1 and either base station BTE 2 or base station BTE 3 is low. Again this effect can be mitigated by ensuring that subscriber unit NTE 1 is transmitting at no more than near minimum power for successful reception.

### Adjustment to Optimum Power Levels

At start-up of a connection at the MAC level, the base station measures the received signal strength of transmissions from a particular subscriber unit for a short period (0.25s). This gives a measurement the accuracy of which depends on the propagation conditions but is typically not expected to be greater than the largest range (threshold (j) as shown in Figure 4). If the received signal strength lies outside this range (+/- j) then the base station commands the subscriber unit to alter its transmit power. The base station may request an increase, decrease or no change. Subsequently a longer measurement period is used to provide a more accurate measurement of the mean received signal strength. Again, if the received signal strength lies outside the (+/- k) range then the base station commands a change in transmit power from the subscriber unit. The third measurement period is the one used in all subsequent measurements and allows the most accurate measurement of mean received power. If the transmit power moves outside the (+/- n) range then the base station will command the subscriber to alter its transmit power.

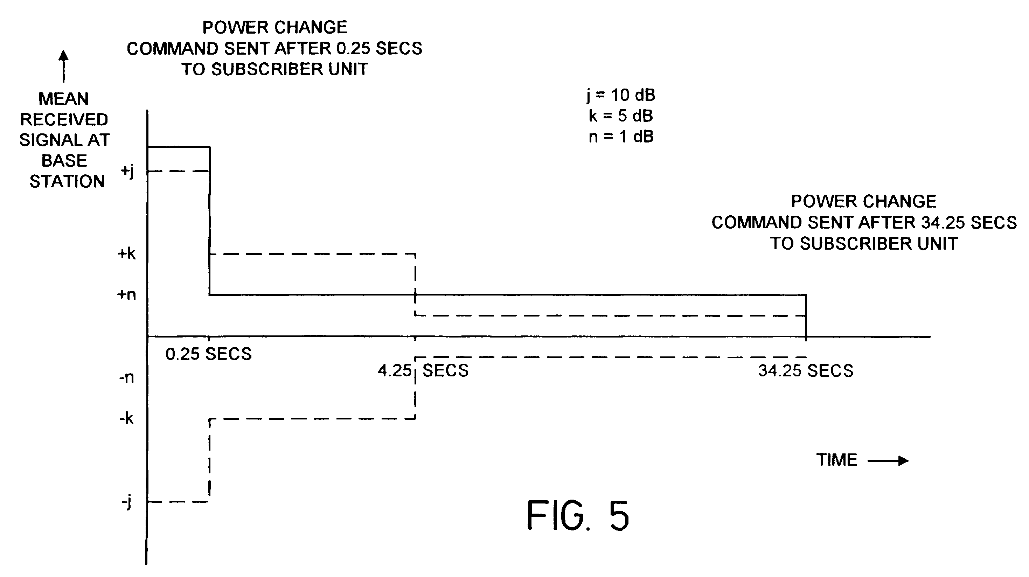

A typical process including each of the three above ranges is illustrated in Figure 5. This shows the case where measurement of signal strength received by the base station in the first 0.25 second is outside the (+/- j) range and as a consequence a first power change command is sent which adjusts the transmit power of the subscriber unit such that the signal strength received at the base station should fall within the (+/- k) range but not the (+/- n) range. A further power change command results after the third measurement period should the mean received signal strength lie outside the (+/- n) range.

An advantage of this approach is that the transmit power of the subscriber unit is adjusted almost upon initial establishment of a MAC connection. This has an advantage over conventional approaches in which a measurement is only declared valid after a suitable integration time during which the amount of co-channel and/or adjacent channel interference can be excessive.

## Claims

1. A method of transmitting messages in predetermined time slots within fixed length times frames between a first transmitting and receiving unit and a second transmitting and receiving unit in which, a power level of a message from at least one unit is detected and characterised in that if the detected level falls outside a range around a predetermined target power level, then the power level of the next message to be transmitted is adjusted so that power level of the next message falls within said range, detection and possible adjustment steps being repeated iteratively for a series of ranges, with each range being smaller than or equal to the previous range applied, and at least one range being smaller than the previous range applied.

2. A method of transmitting messages according to claim 1, in which successive detection steps have increasingly long detection periods so as to determine power levels to successively greater accuracy.

3. A method of transmitting messages according to claim 1 or claim 2, in which the first unit is a base station.

4. A method of transmitting messages according to any of claims 1 to 3, in which the second unit is a subscriber unit.

5. A method of transmitting messages according to claim 4, in which the second unit is one of plurality of subscriber units.

6. A method of transmitting messages according to claim 4 or claim 5, in which the power of signals transmitted from the or each subscriber unit is detected and adjusted.

7. A method of transmitting messages according to any of claims 4 to 6, in which subscriber units are at fixed locations.

8. A method of transmitting messages according to any preceding claim, in which transmissions are by radio.

9. Apparatus comprising a first transmitting and receiving unit and a second transmitting and receiving unit for messages in predetermined time slots within fixed length time frames, at least one unit comprising a power level detection and control means which detects a power level of a message received from the other unit, characterised in that the power level detection and control means determines whether said detected level falls outside a range around a predetermined target power level, and, if said detected level falls outside said range, requests the other unit to adjust the power level of the next message to be transmitted so that power level of the next message falls within the range, wherein the power level detection and control means repeats the detection and possible adjustment steps iteratively for a series of ranges, with at least one range being smaller than the previous range applied and each range being smaller than or equal to the previous range applied.

10. Apparatus according to claim 9, in which the power level detection and control means includes means to apply increasingly long detection periods so as to determine power levels to greater accuracy.

11. Apparatus according to claim 9 or claim 10, in which the first unit is a base station and the second unit is one of a plurality of subscriber units.

12. Apparatus according to claim 11, in which the subscriber units are at fixed locations.

13. Apparatus according to any of claims 9 to 12, in which transmissions are by radio.

14. Communication means comprising a base station and plurality of subscriber units, the base station communicating with each subscriber unit by sending and receiving messages in predetermined time slots within fixed length time frames, wherein power levels of messages from a subscriber unit are repeatedly detected by the base station which sends control signals dependent on the detected power level to selectively adjust the power level of messages subsequently transmitted by said subscriber unit, characterised by each detection and adjustment step including determination of whether or not said detected power level falls within a predetermined range of values around a target power value and adjustment being dependent on said determination of the detected power level not falling within said predetermined range, wherein for at least some successive detection and possible adjustment steps the required power range is smaller than for previous detection steps.

15. Communications means according to claim 14, in which the subscriber units are at fixed locations.

16. A communications network comprising a plurality of cells, each cell having communication means according to claim 14 or claim 15.

17. A communications network according to claim 16 in which RF carrier frequencies are reused among cells to maximise the number of calls which can be made at any time despite a limited bandwidth allocation.

18. A communications network according to claim 17, in which power levels are adjusted to reduce the amount of interference between communications.

## Patentansprüche

1. Verfahren zum Senden von Nachrichten in vorbestimmten Zeitintervallen innerhalb von Zeitrahmen fester Länge zwischen einer ersten und einer zweiten Sende/Empfangseinheit, bei dem ein Leistungspegel einer aus mindestens einer Einheit kommenden Nachricht ermittelt wird, dadurch gekennzeichnet, dass, falls der ermittelte Leistungspegel aus einem Bereich um einen vorbestimmten Soll-Leistungspegel herum heraus fällt, der Leistungspegel der nächsten zu sendenden Meldung so nachgestellt wird, dass er in den Bereich fällt, wobei das Ermitteln und gegebenenfalls das Nachstellen iterativ über eine Serie von Bereichen wiederholt wird und alle Bereiche gleich dem oder kleiner sind als der jeweils vorher angewandte Bereich und mindestens ein Bereich kleiner ist als der vorher angewandte Bereich.

2. Verfahren zum Senden von Nachrichten nach Anspruch 1, bei dem aufeinanderfolgende Ermittlungsschritte zunehmend längere Ermittlungsintervalle aufweisen, um Leistungspegel mit sukzessive zunehmender Genauigkeit zu bestimmen.

3. Verfahren zum Senden von Nachrichten nach Anspruch 1 oder 2, bei dem die erste Einheit eine Basisstation ist.

4. Verfahren zum Senden von Nachrichten nach einem der Ansprüche 1 bis 3, bei dem die zweite Einheit eine Teilnehmereinheit ist.

5. Verfahren zum Senden von Nachrichten nach Anspruch 4, bei dem die zweite Einheit eine aus einer Vielzahl von Teilnehmereinheiten ist.

6. Verfahren zum Senden von Nachrichten nach Anspruch 4 oder 5, bei dem die Leistung der von der beziehungsweise von jeder Teilnehmereinheit gesendeten Signale ermittelt und nachgestellt wird.

7. Verfahren zum Senden von Nachrichten nach den Ansprüchen 4 bis 6, bei dem die Teilnehmereinheiten sich an festen Orten befinden.

8. Verfahren zum Senden von Nachrichten nach einem der vorgehenden Ansprüche, bei dem die Sendungen per Funk erfolgen.

9. Vorrichtung mit einer ersten und einer zweiten Sende/Empfangseinheit für Nachrichten in vorbestimmten Zeitintervallen innerhalb von Zeitrahmen fester Länge, wobei mindestens eine Einheit eine Leistungspegel-Ermittlungs- und Steuereinrichtung aufweist, die einen Leistungspegel einer von der anderen Einheit empfangenen Nachricht ermittelt, dadurch gekennzeichnet, dass die Leistungspegel-Ermittlungs- und Steuereinrichtung bestimmt, ob der ermittelte Leistungspegel aus einem Bereich um einen vorbestimmten Soll-Leistungspegel herum heraus fällt, und, falls der ermittelte Pegel aus diesem Bereich hinaus fällt, die andere Einheit auffordert, den Leistungspegel der nächsten zu sendenden Meldung so nachzustellen, dass er in den Bereich fällt, wobei die Leistungspegel-Ermittlungs- und Steuereinrichtung das Ermitteln und gegebenenfalls das Nachstellen iterativ über eine Serie von 3ereichen wiederholt, und wobei mindestens ein Bereich kleiner ist als der vorher angewandte Bereich und alle Bereiche gleich dem oder kleiner sind als der jeweils vorher angewandte Bereich.

10. Vorrichtung nach Anspruch 9, bei dem die Leistungspegel-Ermittlungs- und Steuereinrichtung Mittel zum Anwenden zunehmend längerer Ermittlungsintervalle aufweist, um Leistungspegel mit größerer Genauigkeit zu ermitteln.

11. Vorrichtung nach Anspruch 9 oder 10, bei dem die erste Einheit eine Basisstation und die zweite Einheit eine aus einer Vielzahl von Teilnehmereinheiten ist.

12. Vorrichtung nach Anspruch 11, bei der die Teilnehmereinheiten sich an festen Orten befinden.

13. Vorrichtung nach den Ansprüchen 9 bis 12, bei der die Sendungen per Funk erfolgen.

14. Kommunikationsanordnung mit einer Basisstation und einer Vielzahl von Teilnehmereinheiten, bei der die Basisstation mit den Teilnehmereinheiten jeweils durch das Senden und Empfangen von Nachrichten in vorbestimmten Zeitintervallen innerhalb von Zeitrahmen fester Länge kommuniziert, und bei der die Basisstation die Leistungspegel von von einer Teilnehmereinheit kommenden Nachrichten wiederholt ermittelt und von dem ermittelten Leistungspegel abhängige Steuersignale aussendet, um den Leistungspegel von Nachrichten, die die Teilnehmereinheit danach sendet, wahlweise nachzustellen, dadurch gekennzeichnet, dass in jedem Ermittlungs- und Nachstellschritt bestimmt wird, ob der ermittelte Leistungspegel in einen vorbestimmten Bereich von Werten um einen Soll-Leistungswert herum fällt, und daß das Nachstellen davon abhängt, daß der ermittelte Leistungspegel nicht in den vorbestimmten Bereich fällt, wobei für mindestens einige sukzessive Ermittlungs- und gegebenenfalls Nachstellschritte der geforderte Leistungsbereich kleiner ist als für jeweils vorhergehende Ermittlungsschritte.

15. Kommunikationsanordnung nach Anspruch 14, bei der die Teilnehmereinheiten sich an festen Orten befinden.

16. Kommunikationsnetz mit einer Vielzahl von Zellen jeweils mit einer Kommunikationsanordnung nach Anspruch 14 oder 15.

17. Kommunikationsnetz nach Anspruch 16, bei dem HF-Trägerfrequenzen unter den Zellen mehrfach genutzt werden, um die Anzahl der Verbindungen zu maximieren, die zu einer gegebenen Zeit trotz begrenzter Bandbreitenzuweisung tätigbar sind.

18. Kommunikationsnetz nach Anspruch 17, bei dem die Leistungspegel nachgestellt werden, um das Ausmaß von Störungen zwischen den Verbindungen zu vermindern.

## Revendications

1. Procédé de transmission de messages dans des créneaux temporels prédéterminés au sein de trames temporelles de longueur fixe entre une première unité de transmission et de réception et une seconde unité de transmission et de réception dans lequel, un niveau de puissance d'un message provenant d'au moins une unité est détecté, caractérisé en ce que si le niveau détecté tombe hors d'une plage située autour d'un niveau de puissance cible prédéterminé, alors le niveau de puissance du message suivant à transmettre est ajusté de façon que la puissance du message suivant tombe dans la plage, les étapes de détection et de possible ajustement étant répétées de manière itérative pour une série de plages, chaque plage étant inférieure ou égale à la plage précédemment appliquée, et au moins une plage étant plus petite que la plage précédemment appliquée.

2. Procédé de transmission de messages selon la revendication 1, caractérisé en ce que les étapes de détection successives présentent des durées de détection croissantes de façon à déterminer les niveaux de puissance avec une précision de plus en plus grande.

3. Procédé de transmission de messages selon la revendication 1 ou 2, caractérisé en ce que la première unité est une station de base.

4. Procédé de transmission de messages selon l'une quelconque des revendications 1 à 3, caractérisé en ce que la seconde unité est une unité d'abonné.

5. Procédé de transmission de messages selon la revendication 4, caractérisé en ce que la seconde unité est une parmi une pluralité d'unités d'abonné.

6. Procédé de transmission de messages selon la revendication 4 ou 5, caractérisé en ce que la puissance des signaux transmis à partir de la ou de chaque unité d'abonné est détectée et ajustée.

7. Procédé de transmission de messages selon l'une quelconque des revendications 4 à 6, caractérisé en ce que les unités d'abonné sont situées à des positions fixes.

8. Procédé de transmission de messages selon l'une quelconque des revendications précédentes, caractérisé en ce que les transmissions sont effectuées par radio.

9. Dispositif comprenant une première unité de transmission et de réception et une seconde unité de transmission et de réception pour les messages dans des créneaux temporels prédéterminés au sein de trames temporelles de longueur fixe, au moins une unité comprenant un moyen de commande et de détection d'un niveau de puissance qui détecte le niveau de puissance d'un message reçu de l'autre unité, caractérisé en ce que le moyen de commande et de détection d'un niveau de puissance détermine si le niveau détecté tombe hors de la plage située autour d'un niveau de puissance cible prédéterminé, et, si le niveau détecté tombe hors de ladite plage, requiert de l'autre unité d'ajuster le niveau de puissance du message suivant à transmettre de façon que le niveau de puissance du message suivant tombe dans la plage, et en ce que le moyen de commande et de détection d'un niveau de puissance répète les étapes de détection et de possible ajustement de manière itérative pour une série de plages, au moins une plage étant plus petite que la plage précédemment appliquée et chaque plage étant plus petite que ou égale à la plage précédemment appliquée.

10. Dispositif selon la revendication 9, caractérisé en ce que le moyen de commande et de détection d'un niveau de puissance comprend un moyen pour appliquer des durées de détection dont la longueur s'accroît de façon à déterminer les niveaux de puissance avec une meilleure précision.

11. Dispositif selon la revendication 9 ou 10, caractérisé en ce que la première unité est une station de base et la seconde unité est une parmi une pluralité d'unités d'abonné.

12. Dispositif selon la revendication 11, caractérisé en ce que les unités d'abonné sont situées à des positions fixes.

13. Dispositif selon l'une quelconque des revendications 9 à 12, caractérisé en ce que les transmissions sont effectuées par radio.

14. Moyen de communication comprenant une station de base et une pluralité d'unités d'abonné, la station de base communiquant avec chaque unité d'abonné par l'émission et la réception de messages dans des créneaux temporels prédéterminés au sein de trames de longueur fixe, dans lequel les niveaux de puissance des messages provenant d'une unité d'abonné sont détectés de façon répétitive par la station de base qui transmet des signaux de commande dépendants du niveau de puissance détecté pour ajuster sélectivement le niveau de puissance des messages ultérieurement transmis par l'unité d'abonné, caractérisé en ce que chaque étape de détection et d'ajustement comprend la détermination du fait que le niveau détecté de puissance tombe ou non dans une plage de valeurs prédéterminée située autour d'une valeur de puissance cible prédéterminée et en ce que l'ajustement dépend de ladite détermination du niveau de puissance ne tombant pas dans la plage prédéterminée, dans lequel pour au moins certaines étapes successives de détection et de possible ajustement, la plage de puissance requise est plus petite que pour les étapes de détection précédentes.

15. Moyen de communication selon la revendication 14, caractérisé en ce que les unités d'abonné sont situées à des positions fixes.

16. Réseau de communication comprenant une pluralité de cellules, chaque cellule présentant un moyen de communication selon la revendication 14 ou 15.

17. Réseau de communication selon la revendication 16, caractérisé en ce que les fréquences porteuses situées dans le domaine des fréquences radio sont réutilisées parmi les cellules afin de maximiser le nombre d'appels pouvant être effectués à n'importe quel moment en dépit de l'attribution d'une bande passante limitée.

18. Réseau de communication selon la revendication 17, caractérisé en ce que les niveaux de puissance sont ajustés afin de réduire le nombre d'interférences entre les communications.
